# EUROPÄISCHE PATENTSCHRIFT

(11) **EP 1 801 478 B1**
(45) Veröffentlichungstag und Bekanntmachung des Hinweises auf die Patenterteilung: **27.01.2010**
(21) Anmeldenummer: 06025275.6
(22) Anmeldetag: 07.12.2006
(51) Int. Cl.: F16K 31/122, F15B 11/036, F02M 21/00

(54) **Absperrventil für einen Behälter für kryogen gespeicherten Kraftstoff**
Shutoff valve for a cryogenic fuel tank
Obturateur pour un réservoir à carburant cryogénique

(30) Priorität: 22.12.2005 DE 102005061584
(43) Veröffentlichungstag der Anmeldung: 27.06.2007
(73) Patentinhaber: Bayerische Motoren Werke Aktiengesellschaft, 80809 München (DE); LUXEMBOURG PATENT COMPANY S.A., 7440 Lintgen (LU)
(72) Erfinder: Roth, Lothaire, 82140 Olching (DE); Antoine, Michel, 7505 Lintgen (LU); Pironet, Daniel, 93360 Neuilly Plaisance (FR)
(74) Vertreter: Schmidt, Günter H. H.

(56) Entgegenhaltungen:
- EP-A- 0 275 227
- EP-A- 1 591 704
- WO-A-02/12765
- AU-B2- 461 365
- DE-A1- 3 741 145
- DE-A1-102005 005 941
- DE-C1- 19 855 047
- FR-A- 1 358 512
- US-A- 4 462 419
- US-A- 4 805 806
- US-A- 5 235 817
- US-A- 6 047 553
- US-A1- 2005 265 868

## Beschreibung

Die Erfindung betrifft ein Absperrventil für einen Behälter zur Speicherung von Kraftstoff als kondensiertes Gas, nach dem Oberbegriff des ersten Anspruchs.

Es ist bereits bekannt, Kraftfahrzeuge zum Beispiel mit Wasserstoff oder Erdgas anzutreiben und diesen Treibstoff als kondensiertes Gas in einem Behälter im Kraftfahrzeug zu speichern. Zu dieser verflüssigten Speicherung sind spezielle druckfeste Behälter notwendig, die aufgrund der tiefen Speichertemperaturen eine sehr gute Isolation besitzen sollten. Dabei ist bekannt, zur Vermeidung von Wärmeeintrag aus der Umgebung, doppelwandige, vakuumisolierte Behälter zu verwenden.

So erfolgt die Speicherung von zum Beispiel Wasserstoff in mobilen Fahrzeugen häufig in Form von tiefkaltem, verflüssigtem Wasserstoff, als kondensiertes Gas. Da in diesem Zustand infolge der hohen Energiedichte (gegenüber einer Speicherung von warmem, komprimiertem Wasserstoff-Gas) eine für Fahrzeuge vorteilhafte hohe Reichweite erzielt werden kann.

Der tiefkalte, flüssige Wasserstoffvorrat wird im Fahrzeug im siedenden Zustand in einem thermisch sehr gut isolierten, druckdichten Behälter gespeichert. Die Energiedichte des siedenden Wasserstoffs wird dabei durch Lagerung bei einer Temperatur wenig über der Siedetemperatur bei Umgebungsdruck, ca. 20 K, maximal. In den heute technisch umgesetzten Vorratsbehältern liegt der Wasserstoff typischerweise bei Temperaturen von ca. 21 K bis ca. 27 K und den damit korrespondierenden Siededrücken von ca. 2 bar (abs.) bis ca. 5 bar (abs.) vor.

Im unteren Teil des Vorratsbehälters liegt der siedende Wasserstoff als massedichtere flüssige Phase und darüber liegend als gasförmige Phase vor. Die unmittelbare Förderung des Wasserstoffs aus dem Vorratsbehälter in eine Vorlaufleitung hin zu einem Konditionierer oder Verbraucher erfolgt im einfachsten Fall über das zwischen Tankinnerem und der Umgebung anliegende statische Druckgefälle oder durch eine gezielte Bedruckung des Vorratsbehälters. Aus einem solchen Kryotank wird siedend gespeichertes H2 im allgemeinen aus der Gasphase entnommen. Dem Vorratsbehälter wird während der H2-Entnahme Wärme zugeführt, die zum Abdampfen von LH2 im Behälter und damit zur Aufrechterhaltung eines für die Förderung erforderlichen Behälterdruckes führt, der sonst durch die Entnahme soweit sinken würde, dass eine Förderung nicht mehr möglich wäre. Diese zur Druckhaltung benötigte Wärmezufuhr erfolgt über eine separate Heizung, die z. B. als elektrisch betriebenes Heizelement ausgeführt sein kann oder z.B. direkt durch Zufuhr von erwärmtem, gasförmigem H2, das einem erwärmten Vorlaufstrom gezielt abgezweigt und in den Innenbehälter (zurück-) geleitet wird.

Mobile Vorratsbehälter besitzen nach derzeitigem Stand eine Entnahmeeinrichtung für den kryogen gespeicherten Kraftstoff, die mindestens aus einer Entnahmeleitung mit einem tanknah untergebrachten Absperrventil besteht. In den meisten Fällen besitzt die Entnahmeeinrichtung jedoch mindestens zwei Entnahmeleitungen mit mindestens je einem Absperrventil, eine erste Entnahmeleitung für die Entnahme von kondensiertem Gas (LH2) und eine zweite Entnahmeleitung für die Entnahme von Gas (GH2).

Die DE 37 41 145 C2 beschreibt ein Entnahmesystem für Flüssigwasserstoff mit einer außerhalb eines Speichertanks angeordneten Fördereinheit, die über eine Saugleitung mit dem Speichertank verbunden ist. Diesseits der Fördereinheit ist in der Saugleitung ein tankseitiges Absperrventil vorgesehen und jenseits der Fördereinheit ist in der Zuleitung zur Brennkraftmaschine ein motorseitiges Absperrventil vorgesehen. Beide Absperrventile werden über eine Anlaufsteuerung der Förderpumpe gesteuert und sind in der Zeichnung als elektrisch betätigte Magnetventile dargestellt. Es ist durchaus nicht einfach im Kryogenspeicherbereich Undichtigkeiten bei elektrisch betätigten Ventilen zu vermeiden, aufgrund einer wegen Auslegungsgrenzen im Fahrzeugeinsatz nur begrenzt zur Verfügung stehenden elektromagnetischen Kraft.

Aufgrund dieses Nachteils beschreibt die noch unveröffentlichte Patentanmeldung DE 10 2005 005 941 der Anmelderin einen Kryotank zur Speicherung von Kraftstoff als kondensiertes Gas, wobei der Behälter eine Entnahmeeinrichtung für den kryogen gespeicherten Kraftstoff besitzt, die mindestens aus einer Entnahmeleitung mit einem Absperrventil besteht das mittels Druckluft betätigt wird. Dadurch können hohe Ventilanpresskräfte realisiert werden, die zum Beispiel größer als 1000 Newton sind, um im kryogenen Bereich die Dichtheit zu verbessern. Die Ventilanpresskräfte werden durch steife Federn erzeugt, die pneumatisch gelöst werden können. Diese großen Anpresskräfte am Ventilsitz reduzieren vorteilhafterweise auch die Schmutz- und Partikelempfindlichkeit des Absperrventils, was wiederum zur Folge hat, dass für Partikel im Mikrometer-Bereich keine Filter eingebaut werden müssen. Dies reduziert die Druckverluste im Tanksystem, was zum Beispiel Betankungszeiten verkürzt, die Reichweite vergrößert etc.

Die EP-A-0 275 227 beschreibt als nächstliegender Stand der Technik dagegen ein über verbundene Kolben pneumatisch betätigtes Ventil für den Einsatz im nicht kryogenen Bereich.

Das US-Patent 4,462,419 beschreibt ein Ventil zur Regelung von in einem Vakuumsystem kryogen gespeicherten Flüssigkeiten. Um eine Temperaturerhöhung der kryogen gespeicherten Flüssigkeit zu vermeiden, besitzt der Aktuator des Ventils einen großen Abstand zum Ventilschliessorgan mit Ventilsitz, wobei auch noch eine Kühleinrichtung für das Ventilgehäuse vorgesehen ist, zwischen Aktuator und Ventilsitz. Dieses Ventil baut sehr groß und ist durch die Kühleinrichtung aufwändig im Betrieb. Für mobilen Betrieb in einem Kraftfahrzeug ist ein solches Ventil nur bedingt geeignet.

Aufgabe der vorliegenden Erfindung ist es, ein pneumatisch betätigtes Absperrventil für einen Behälter zur Speicherung von Kraftstoff als kondensiertes Gas, insbesondere für einen Kryotank, bereitzustellen, das einfach aufgebaut und so für einen Betrieb in Zusammenhang mit einem solchen Kraftfahrzeugtank geeignet ist. Es soll die Entnahmeleitung zuverlässig dicht, unempfindlich gegen Verunreinigungen absperren. Die Aufgabe der Erfindung wird durch die Merkmale des Anspruchs 1 gelöst. Vorteilhafte Aus- und Weiterbildungen der Erfindung sind Inhalt der abhängigen Ansprüche.

Nach der Erfindung ist ein Absperrventil für einen Behälter zur Speicherung von Kraftstoff als kondensiertes Gas, insbesondere für einen Kryotank für einen mit kryogen gespeichertem Kraftstoff betreibbaren Verbraucher, insbesondere eine Brennkraftmaschine eines Kraftfahrzeugs, wobei der Behälter eine Entnahmeeinrichtung für den kryogen gespeicherten Kraftstoff besitzt, mindestens bestehend aus einer Entnahmeleitung mit dem Absperrventil, das mittels Druckluft betätigt wird, wobei das Absperrventil einen pneumatischen Aktuator besitzt, dessen druckluftbeaufschlagter Zylinder mehrere mit einer Kolbenstange verbundene Kolben enthält, die gleichzeitig so mit Druckluft beaufschlagt werden, dass sich für jeden Kolben und die Kolbenstange der selbe Verschiebeweg ergibt, bei Addition der auf die Kolbenstange wirkenden Verschiebekraft aus den auf die Kolben wirkenden Einzelkräften und wobei ein Verschlussorgan des Absperrventils, beaufschlagt von einer Schliessfeder, so gegen einen Öffnungsquerschnitt eines rohrförmigen Ventilsitzes in Fortsetzung eines Einlasskanals für kryogen gespeicherten Kraftstoff gepresst wird, dass eine zu einem Auslasskanal hin gas- und flüssigkeitsdichte Verbindung zwischen Verschlussorgan und rohrförmigem Ventilsitz aufrechterhalten wird, **dadurch gekennzeichnet, dass** das Verschlussorgan des Absperrventils eine Kugel ist und dass zwischen Kolbenstange und Kugel ein mindestens Längskraft übertragendes inneres Rohr eingebracht ist, das innen und außen eine Wärmeübergang verhindernde Isoliereinrichtung besitzt.

Das hat den Vorteil, dass der Aktuator bei kleinem Durchmesser eine genügend große Ventilöffnungskraft bereitstellen kann, eine starke Schließfeder zu betätigen, die aufgrund ihrer großen Rückstellkraft die Dichtheit des Ventils auch trotz Verunreinigungen zuverlässig gewährleistet. Außerdem kann der Aktuator einfach im Ventilgehäuse untergebracht werden, was Vorteile bei der Montage des Absperrventils als eine Einheit am Behälter bringt. Es ist dann nur noch die Druckluft anzuschließen. So kann ein pneumatisch betätigtes Absperrventil bereitgestellt werden, das einfach aufgebaut und so für einen Betrieb in Zusammenhang mit einem Kraftfahrzeugtank geeignet ist. Das innere Rohr kann dabei vorteilhafterweise ebenfalls aus wärmeisolierendem Werkstoff bestehen.

Ein solcher Ventilverschluss gewährleistet die zuverlässige Dichtheit des Ventils auch trotz Verunreinigungen und die Beibehaltung der für einen Betrieb in Zusammenhang mit einem Kraftfahrzeugtank geeigneten kleinen Dimensionen des Ventils, was Vorteile bei der Montage des Absperrventils als eine Einheit am oder im Behälter bringt.

Eine bevorzugte Ausführung der Erfindung ist **dadurch gekennzeichnet, dass** die Schliessfeder auf die Kolbenstange wirkt und dass die Verschiebebewegung der Kolbenstange aufgrund der Druckluftbeaufschlagung der Kolben entgegen der Richtung der Rückstellkraft der Schliessfeder stattfindet. Wird das Absperrventil also nicht mit Druckluft beaufschlagt, ist es geschlossen, was bei einem Funktionsausfall insofern vorteilhaft ist, dass drucklos Sicherheit gegen Gasaustritt gewährleistet ist.

Eine weitere bevorzugte Ausführung der Erfindung zeichnet sich dadurch aus, dass die Kolben des pneumatischen Aktuators über die Kolbenstange mit Druckluft beaufschlagt werden, was große Vorteile beim Bauraumbedarf des Aktuators bringt. Dieser kann einfach über einen einzigen Anschluss von außen mit Druckluft versorgt und in einem sonst geschlossenen Gehäuse untergebracht werden.

Wenn dann das Absperrventil ein einstückiges Ventilgehäuse mit einem Deckel besitzt, der das Ventilgehäuse verschliesst, wobei die Druckluft durch den Deckel in die Kolbenstange geführt werden kann und zusätzlich der druckluftbeaufschlagte Zylinder des pneumatischen Aktuators über eine weitere Isoliereinrichtung verfügt, die den Wärmeübergang auf das Ventilgehäuse einschränkt, hat das den Vorteil, dass auf einfache Weise der mit Wasserstoff beaufschlagte Bereich des Ventils vom mit Luft beaufschlagten Aktuatorbereich getrennt und wärmeisoliert ist. Diese thermische Abkopplung durch zylindrische Isolatoren bzw. Isolationen, die auch die Kolbenstange selbst betrifft, macht es möglich, dass der Aktuator im Gehäuse integriert werden kann. So kann die Kraft der Schließfeder übertragende Einrichtung zum Beispiel als Rohr ausgebildet sein, um die Kälteübertragung vom Wasserstoff- zum Aktuatorbereich zu minimieren, wobei als günstig ausgewähltes Material wärmeisolierende Kunststoffe in Frage kommen.

Insbesondere ist bei einer bevorzugten Ausführungsform die weitere Isoliereinrichtung ein Luftspalt zwischen druckluftbeaufschlagtem Zylinder des pneumatischen Aktuators und Ventilgehäuse. Dadurch wird die Wärmeübertragung auf den Aktuator über das Gehäuse wesentlich eingeschränkt, weil nur im oberen und unteren Bereich des Aktuators flächenminimierte Kontaktstellen zum Gehäuse vorhanden sind.

Bei einer weiteren bevorzugten Ausführung der Erfindung kann die Entnahmeeinrichtung auch als Befülleinrichtung für kryogen gespeicherten Kraftstoff dienen. Das macht den Tankaufbau besonders einfach. Wobei die Entnahmeeinrichtung mindestens zwei Entnahmeleitungen mit mindestens je einem Absperrventil auf, eine erste Entnahmeleitung für die Entnahme von kondensiertem Gas und eine zweite Entnahmeleitung für die Entnahme von Gas. Das hat den Vorteil, dass die Versorgung des Verbrauchers mit Gas zuverlässig sichergestellt ist.

Bei einer weiteren bevorzugten Ausführung der Erfindung dient die Entnahmeeinrichtung auch als Befülleinrichtung für kryogen gespeicherten Kraftstoff. Das hat den Vorteil, dass eine separat ausgebildete Befülleinrichtung entfallen kann.

Wenn die Druckluft zur Betätigung der Absperrventile mittels einer kraftfahrzeugeigenen Druckluftanlage erzeugt wird, steht immer genügend Druckluft zur Verfügung. Außerdem kann diese dann auch noch für andere Zwecke verwendet werden, oder eine sowieso vorhandene Druckluftanlage wird zusätzlich noch zur Betätigung der Absperrventile eingesetzt. Dies ist vorteilhafterweise preiswert und ohne großen Aufwand technisch zu verwirklichen.

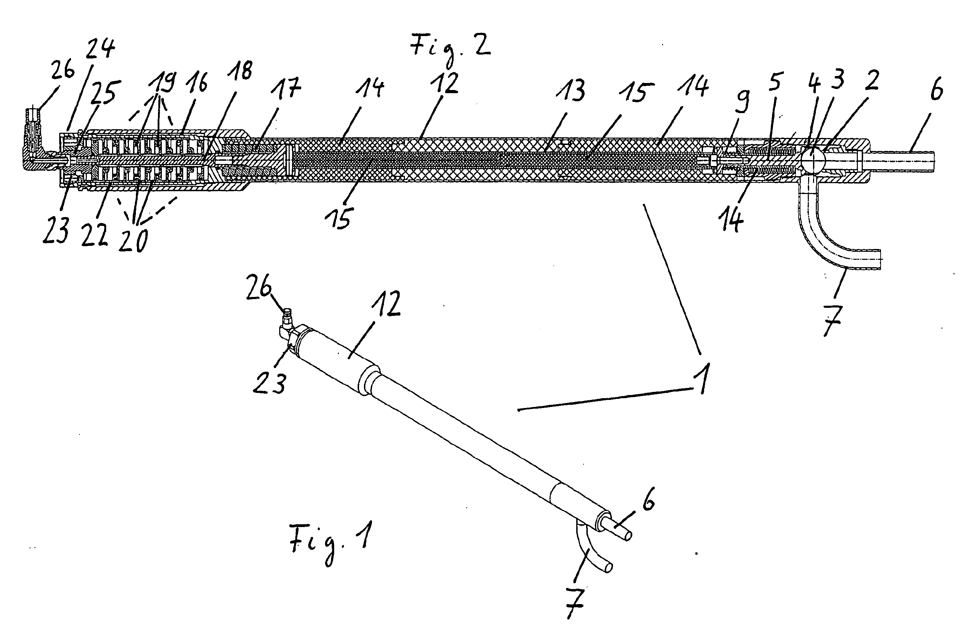

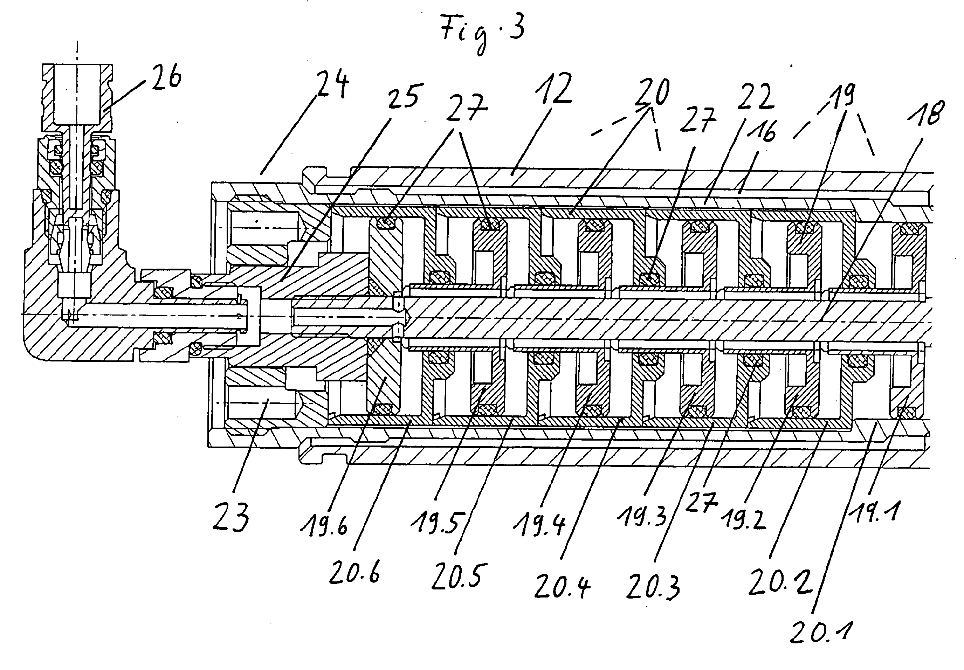

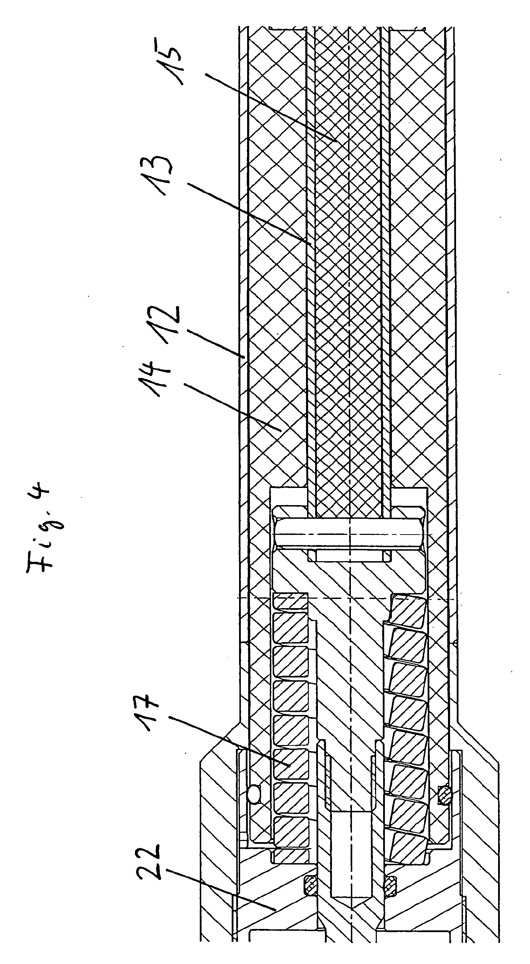

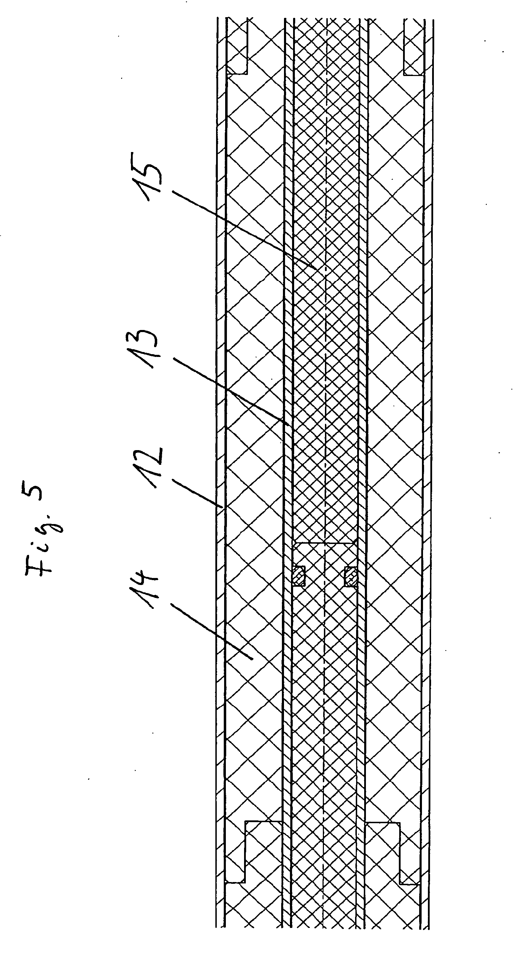

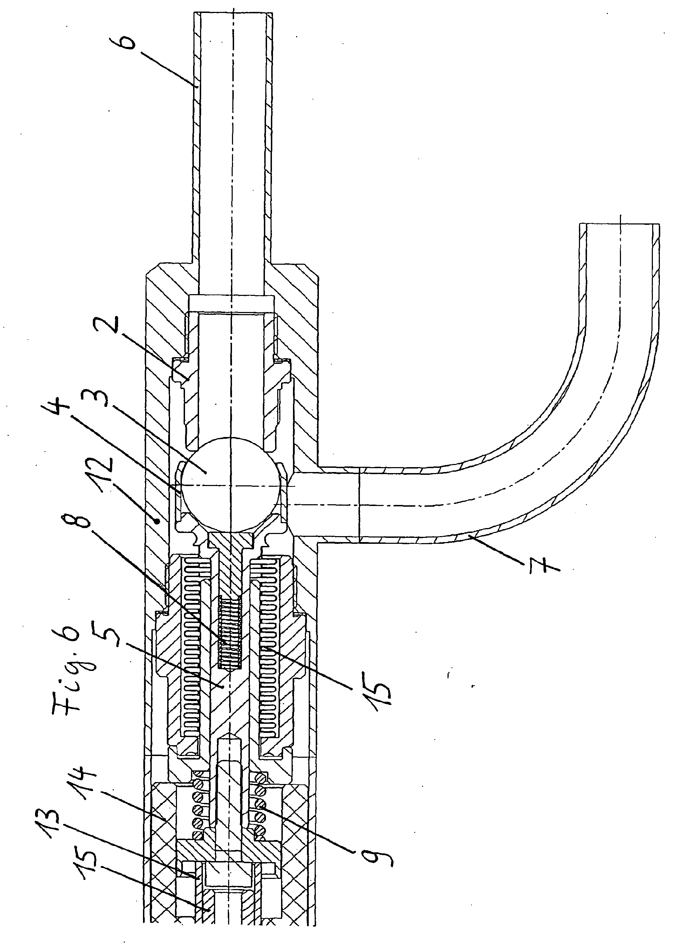

Im Folgenden wird die Erfindung anhand eines bevorzugten Ausführungsbeispiels weiter erläutert. Die Figuren zeigen dasselbe Absperrventil einer Anlage zur Speicherung von kondensiertem Gas eines Kraftfahrzeugs gemäß der Erfindung. Figur 1 zeigt das Absperrventil verkleinert in räumlicher Ansicht und Figur 2 verkleinert im Längsschnitt. Die Figuren 3 bis 6 sind Teilvergrößerungen von Figur 2, wobei Figur 3 im wesentlichen den Aktuator am einen Ende des Absperrventils zeigt, Figur 4 das an den Aktuator anschließende Teilstück mit der Schließfeder, Figur 5 die Isoliereinrichtung zwischen Schließfederteilstück und Ventilteilstück und schließlich zeigt Figur 6 das Ventilteilstück am anderen Ende des Absperrventils.

In einem nicht gezeichneten Kraftfahrzeug ist ein nicht gezeichneter Kryotank zur Speicherung von Flüssigwasserstoff eingebaut. Dieser dient als Kraftstoff zur Versorgung einer das Kraftfahrzeug antreibenden, nicht gezeichneten, Brennkraftmaschine. Der Wasserstoff liegt im Kryotank in zwei Aggregatzuständen vor, im oberen Teil als gasförmiger Wasserstoff und im unteren Teil als kondensiertes Gas in flüssiger Form. Eine nicht gezeichnete Entnahmeeinrichtung für Wasserstoff, sowohl aus der flüssigen Phase LH2 als auch gasförmig GH2 ist in den Kryotank eingebaut, diese versorgt über zwei nicht gezeichnete Entnahmeleitungen, eine für die Entnahme von kondensiertem Gas LH2 und eine für die Entnahme von Gas GH2, die Brennkraftmaschine mit Wasserstoff.

Jede der Entnahmeleitungen ist tanknah mit einem in den Figuren 1 bis 6 gezeichneten pneumatisch betätigbaren Absperrventil 1 versehen, das mittels Druckluft aus einer nicht gezeichneten kraftfahrzeugeigenen Druckluftanlage betätigt wird. Zusätzlich wird die Entnahmeeinrichtung über die Entnahmeleitungen auch zum Befüllen des Behälters mit kryogen gespeichertem Kraftstoff benutzt.

Die Druckluftanlage selbst ist Stand der Technik, zum Beispiel bei Fahrzeugen mit druckluftbetätigten Bremsen. Sie besteht im wesentlichen aus einem nicht gezeichneten Kompressor und einem nicht gezeichneten Druckluftspeicher.

Anforderungen an ein solches pneumatisches Regelsystem sind, einerseits die Absperrventile 1 des Kryotanks zu öffnen beziehungsweise zu schließen, andererseits soll eine eventuell vorhandene, nicht gezeichnete Nebensystemkapsel mit Luft gespült werden können. Um die Absperrventile 1 des Kryotanks öffnen zu können, muss erst der Druckluftspeicher mit Druckluft durch den Kompressor gefüllt werden. Liegt der festgelegte Betriebsdruck im Druckluftspeicher an, können über nicht gezeichnete Steuerventile die Absperrventile 1 unabhängig voneinander sowie gemeinsam geöffnet werden. Weiterhin kann durch Öffnen eines nicht gezeichneten weiteren Steuerventils und durch Anlaufen des Kompressors die Nebensystemkapsel mit Druckluft gespült werden.

Für das Befüllen des Kryotanks mit oder die Entnahme von Wasserstoff aus diesem muss mindestens ein Absperrventil 1 geöffnet werden. Dafür muss über einen Drucksensor festgestellt werden, ob der Luftdruck im Druckluftspeicher ausreicht. Ist der Druck hoch genug, können die Elektromagneten der Steuerventile bestromt werden, so dass diese die nicht gezeichnete Verbindung vom Druckluftspeicher zum Absperrventil 1 öffnen. Dadurch wird das Absperrventil 1 mit Luftdruck beaufschlagt und der eigentliche Betankungsvorgang oder die Entnahme kann durchgeführt werden.

Die Figuren 1 bis 6 zeigen das Absperrventil 1 mit einem Steckverbinder 26 für den Druckluftanschluss, der in einen Anschlagbolzen 25 eingebracht ist. Dieser stellt unter anderem eine druckluftdichte Verbindung zu einer Kolbenstange 18 her, über die sechs Kolben 19 (19.1 bis 19.6 in Figur 3) eines pneumatischen Aktuators 24 des Absperrventils 1 gleichzeitig so mit Druckluft beaufschlagt werden, dass sich für jeden Kolben 19 und die Kolbenstange 18 der selbe Verschiebeweg ergibt, bei Addition der auf die Kolbenstange 18 wirkenden Verschiebekraft aus den auf die Kolben 19 wirkenden Einzelkräften. In den druckluftbeaufschlagten Zylindern des pneumatischen Aktuators 24, den Kolbengehäusen 20 (20.1 bis 20.6 in Figur 3), bewegen sich dann die sechs Kolben 19, die mit der Kolbenstange 18 verbunden sind, und verschieben die Kolbenstange 18 entgegen der Richtung der Rückstellkraft einer Schliessfeder 17, die ein die Kolbengehäuse 20 aufnehmendes Aktuatorgehäuse 22 mit der Kolbenstange 18 verspannt. Dadurch wird das als Kugel 3 ausgebildete Ventilschließelement von der Schliesskraft der Schliessfeder 17 entlastet und durch ein inneres Rohr 13 und eine mit diesem verbundene Zugfeder 9 in Ventilöffnungsrichtung zusammen mit einer die Kugel 3 über einen Haltering 4 beweglich festlegenden Ventilgewindestange 5 verschoben, was bewirkt, dass der Öffnungsquerschnitt eines rohrförmigen Ventilsitzes 2 in Fortsetzung eines Einlasskanals 6 für kryogen gespeicherten Kraftstoff von der Kugel 3 freigegeben wird. Damit wird eine zu einem Auslasskanal 7 gas- und flüssigkeitsdichte Verbindung zwischen Kugel 3 und rohrförmigem Ventilsitz 2 aufgehoben und Flüssigwasserstoff strömt aus dem Kryotank über den Einlasskanal 6 zum Auslasskanal 7, durch das Absperrventil hindurch.

Wird der Überdruck aus den druckluftbeaufschlagten Zylindern des pneumatischen Aktuators 24 durch den Druckluftanschluss wieder abgelassen, bewegen sich die sechs Kolben 19 mit der Kolbenstange 18 und der Ventilgewindestange 5 mit Haltering 4 und Kugel 3 aufgrund der Rückstellkraft der Schliessfeder 17 wieder in Richtung Ventilsitz 2. Die Ventilgewindestange 5 und damit die Kugel 3 werden dazu über das innere Rohr 13 mit der Kraft der Schliessfeder 17 beaufschlagt, wodurch die Kugel 3 dichtend mit dem Ventilsitz 2, einem in das einstückig gestaltete Ventilgehäuse 12 eingesetzten Nickelrohr, in Kontakt gehalten wird.

Um die Dichtheit des Absperrventils 1 zuverlässig zu gewährleisten ist die Kugel 3 bevorzugt aus extrem hartem Wolframcarbid und der Ventilsitz 2 aus einer im vergleich dazu relativ weichen Stahllegierung gefertigt, zum Beispiel aus einer Nickellegierung. Um die Passung von Kugel 3 und Ventilsitz 2 zu optimieren, kann vor Einsatz des Absperrventils 1 die Kugel 3 in den Ventilsitz 2 eingepresst werden. Dafür kommt zum Beispiel eine Presskraft von 5000 bis 10000 Newton in Frage. Da die Kugel 3 mittels des Halterings 4 freibeweglich gehalten wird, wird ein Achsversatz zum Ventilsitz 2 gut ausgeglichen. Eine Druckfeder 8, die die Kugel 3 im Haltering 4 durch Vorspannung zur Ventilgewindestange 5 fixiert hält, verhindert ein Flattern der Kugel 3 im Gasstrom, bei geöffnetem Absperrventil 1.

Das Verschlussorgan des Absperrventils 1 ist, wie alle weiteren Elemente dieses Teils des Ventilgehäuses 12, zum Beispiel Einlass- und Auslasskanal 6, 7, sehr tiefen Temperaturen des kryogen gespeicherten Kraftstoffs ausgesetzt. Diese liegen bei bis zu -253 Grad Celsius. Der pneumatische Aktuator 24, dessen bewegliche Teile mittels O-Ringen 27 luftdicht gegenüber dessen nicht beweglichen Teilen abgedichtet sind, darf solch niedrigen Temperaturen nicht ausgesetzt werden, da er druckluftbetrieben ist. Daher ist eine Isolierung nötig, die die Wärmeübertragung vom Aktuator 24 auf das Ventilgehäuse 12 und sonstige Funktionsgruppen mindert. Dazu ist das Schließbetätigungskraft übertragende innere Rohr 13, deshalb als Rohr und aus einem wärmeisolierenden Kunststoff ausgebildet. Außerhalb und innerhalb des inneren Rohrs 13 ist in den verbleibenden Raum im Mittelteil des einstückigen Ventilgehäuses 12, zwischen Kolbenstange 18 und Kugel 3, eine weiteren Wärmeübergang verhindernde Isoliereinrichtung 14, 15, zum Beispiel aus den Kunststoffen PTFE oder PU, eingebracht. Diese Isolationszylinder, um das innere Rohr 13 herum und in diesem, sind auch so ausgebildet, dass das Ventilgehäuse 12 völlig mit Material ausgefüllt ist, was bewirkt, dass im Ventilgehäuse 12 so wenig wie möglich Freiraum mit Luft gefüllt ist, die sich verflüssigen könnte durch die extrem kalten Temperaturen im unteren Bereich des Absperrventils 1 und/oder deren Wassergehalt vereisen und das Absperrventil 1 blockieren könnte. Dadurch, dass die Isoliereinrichtungen 14, 15 fast das ganze Volumen des mittleren Bereichs des Ventilgehäuses 12 einnehmen, ist so ein Prozess nicht möglich und das Absperrventil 1 vor Versagen geschützt. Aufgrund der Isoliereinrichtungen 14, 15 kann im Ventilgehäuse 12 kein Luftwechsel stattfinden.

Außerdem verfügt der druckluftbeaufschlagte Zylinder des pneumatischen Aktuators 24 über eine weitere Isoliereinrichtung, die den Wärmeübergang auf das Ventilgehäuse 12 einschränkt. Zwischen druckluftbeaufschlagtem Zylinder des pneumatischen Aktuators 24 und Ventilgehäuse 12 ist ein Luftspalt 16 eingebracht.

Alle im vorstehenden Absatz aufgeführten Teile und Funktionsgruppen sind in dem einstückig ausgebildeten, lasergeschweißten Ventilgehäuse 12 mit Deckel 23 untergebracht, mit dem Vorteil, dass der Aktuator 24 durch Isolation thermisch geschützt ist, wobei gleichzeitig aufgrund dessen Mehrstufigkeit die Anpresskraft der Schliessfeder 17 sehr groß sein kann, was wiederum zu einfachem Aufbau und kleineren Baumaßen des Absperrventils 1 beiträgt.

Ein solches Absperrventil 1 ist sowohl in einer Entnahmeeinrichtung als auch in einer Befülleinrichtung für kryogen gespeicherten Kraftstoff verwendbar. Des weiteren kann eine solche Einrichtung auch beide Funktionen erfüllen. Vorteilhafterweise kann sich bei einem Kryotank, der als zweischaliger Vakuumbehälter ausgebildet ist, das Absperrventil 1 zwischen dem Außen- und dem Innenbehälter im Bereich der Vakuumisolation befinden, insbesondere über eine Haltevorrichtung direkt an der Innenseite des Außenbehälters befestigt, zum Beispiel angeschweißt. Das Absperrventil 1 kann auch an beiden Behältern angeschweißt bzw. andersartig befestigt sein. Innen am Außenbehälter und außen am Innenbehälter. In allen Fällen ist eine solche Bauweise auf jeden Fall günstig fürs Package des Kraftfahrzeugs, das Absperrventil 1 benötigt nämlich für sich keinen extra zu reservierenden Bauraum.

Außerdem ist das Absperrventil 1 dadurch möglichst tanknah untergebracht, mit dem Vorteil, dass in einer sicherheitskritischen Lage die Wasserstoffentnahme direkt am Kryotank selbst gesperrt werden kann und nicht eine vom Kryotank entfernte Leitung gesperrt wird. Es kann zwischen Kryotank und Absperrventil so vorteilhafterweise kein Bruch der Entnahme-/Befüllleitung auftreten.

## Patentansprüche

1. Absperrventil (1) für einen Behälter zur Speicherung von Kraftstoff als kondensiertes Gas, insbesondere für einen Kryotank, für einen mit kryogen gespeichertem Kraftstoff betreibbaren Verbraucher, insbesondere eine Brennkraftmaschine eines Kraftfahrzeugs, wobei der Behälter eine Entnahmeeinrichtung für den kryogen gespeicherten Kraftstoff besitzt, mindestens bestehend aus einer Entnahmeleitung mit dem Absperrventil (1), das mittels Druckluft betätigt wird, wobei das Absperrventil (1) einen pneumatischen Aktuator (24) besitzt, dessen druckluftbeaufschlagter Zylinder mehrere mit einer Kolbenstange (18) verbundene Kolben (19, 19.1 bis 19.6) enthält, die gleichzeitig so mit Druckluft beaufschlagt werden, dass sich für jeden Kolben (19, 19.1 bis 19.6) und die Kolbenstange (18) der selbe Verschiebeweg ergibt, bei Addition der auf die Kolbenstange (18) wirkenden Verschiebekraft aus den auf die Kolben (19, 19.1 bis 19.6) wirkenden Einzelkräften und wobei ein Verschlussorgan des Absperrventils (1), beaufschlagt von einer Schliessfeder (17), so gegen einen Öffnungsquerschnitt eines rohrförmigen Ventilsitzes (2) in Fortsetzung eines Einlasskanals (6) für kryogen gespeicherten Kraftstoff gepresst wird, dass eine zu einem Auslasskanal (7) hin gas- und flüssigkeitsdichte Verbindung zwischen Verschlussorgan und rohrförmigem Ventilsitz (2) aufrechterhalten wird, **dadurch gekennzeichnet, dass** das Verschlussorgan des Absperrventils (1) eine Kugel (3) ist und dass zwischen Kolbenstange (18) und Kugel (3) ein mindestens Längskraft übertragendes inneres Rohr (13) eingebracht ist, das innen und außen eine Wärmeübergang verhindernde Isoliereinrichtung (15, 14) besitzt.

2. Absperrventil (1) nach Anspruch 1, **dadurch gekennzeichnet, dass** die Schliessfeder (17) auf die Kolbenstange (18) wirkt und dass die Verschiebebewegung der Kolbenstange (18) aufgrund der Druckluftbeaufschlagung der Kolben (19, 19.1 bis 19.6) entgegen der Richtung der Rückstellkraft der Schliessfeder (17) stattfindet.

3. Absperrventil (1) nach Anspruch 1 oder 2, **dadurch gekennzeichnet, dass** die Kolben (19, 19.1 bis 19.6) des pneumatischen Aktuators (24) über die Kolbenstange (18) mit Druckluft beaufschlagt werden.

4. Absperrventil (1) nach einem der Ansprüche 1 bis 3, **dadurch gekennzeichnet, dass** dieses ein einstückiges Ventilgehäuse (12) mit einem Deckel (23) besitzt, der das Ventilgehäuse (12) verschliesst.

5. Absperrventil (1) nach Anspruch 4, **dadurch gekennzeichnet, dass** die Druckluft durch den Deckel (23) in die Kolbenstange (18) geführt wird.

6. Absperrventil (1) nach einem der Ansprüche 1 bis 5, **dadurch gekennzeichnet, dass** der druckluftbeaufschlagte Zylinder des pneumatischen Aktuators (24) über eine weitere Isoliereinrichtung verfügt, die den Wärmeübergang auf das Ventilgehäuse (12) einschränkt.

7. Absperrventil (1) nach Anspruch 8, **dadurch gekennzeichnet, dass** die weitere Isoliereinrichtung ein Luftspalt zwischen druckluftbeaufschlagtem Zylinder des pneumatischen Aktuators (24) und Ventilgehäuse (12) ist.

8. Absperrventil (1) nach einem der Ansprüche 1 bis 7, **dadurch gekennzeichnet, dass** die Entnahmeeinrichtung auch eine Befülleinrichtung für kryogen gespeicherten Kraftstoff ist.

## Claims

1. A shut-off valve (1) for a container for storing fuel as a condensed gas, more especially for a cryotank, for a consumer which can be operated with cryogenically stored fuel, more especially an internal combustion engine of a motor vehicle, wherein the container has a removal device for the cryogenically stored fuel, at least consisting of a removal line with the shut-off valve (1), which is actuated by means of compressed air, wherein the shut-valve (1) has a pneumatic actuator (24), the compressed air-loaded cylinder of which contains a plurality of pistons (19, 19. 1 to 19.6) connected to a piston rod (18), which are simultaneously loaded with compressed air in such a way that the same displacement path is produced for each piston (19, 19. 1 to 19.6) and the piston rod (18) on addition of the displacement force acting on the piston rod (18) from the individual forces acting on the pistons (19, 19. 1 to 19.6) and wherein a closure member of the shut-off valve (1), loaded by a closing spring (17), is pressed against an opening cross section of a tubular valve seat (2) in a continuation of an inlet channel (6) for cryogenically stored fuel in such a way that a gas-tight and liquid-tight connection to an outlet channel (7) is maintained between the closure member and tubular valve seat (2), **characterised in that** the closure member of the shut-off valve (1) is a ball (3) and **in that** an inner tube (13) which transmits at least longitudinal force is introduced between the piston rod (18) and ball (3) and has, on the inside and outside, an insulating device (15, 14) preventing heat transfer.

2. A shut-off valve (1) according to claim 1, **characterised in that** the closing spring (17) acts on the piston rod (18) and **in that** the displacement movement of the piston rod (18), because of the compressed air loading of the pistons (19, 19. 1 to 19.6), takes place counter to the direction of the restoring force of the closing spring (17).

3. A shut-off valve (1) according to claim 1 or 2, **characterised in that** the pistons (19, 19. 1 to 19.6) of the pneumatic actuator (24) are loaded with compressed air via the piston rod (18).

4. A shut-off valve (1) according to any one of claims 1 to 3, **characterised in that** the latter has a one-piece valve housing (12) with a lid (23) which closes the valve housing (12).

5. A shut-off valve (1) according to claim 4, **characterised in that** the compressed air is guided through the lid (23) into the piston rod (18).

6. A shut-off valve (1) according to any one of claims 1 to 5, **characterised in that** the compressed air-loaded cylinder of the pneumatic actuator (24) has a further insulating device which limits the heat transfer to the valve housing (12).

7. A shut-off valve (1) according to claim 6, **characterised in that** the further insulating device is an air gap between the compressed air-loaded cylinder of the pneumatic actuator (24) and valve housing (12).

8. A shut-off valve (1) according to any one of claims 1 to 7, **characterised in that** the removal device is also a filling device for cryogenically stored fuel.

## Revendications

1. Vanne d'arrêt (1) de réservoir stockant du carburant à l'état de gaz condensé, notamment réservoir cryogénique pour un utilisateur fonctionnant avec du carburant stocké à l'état cryogénique, notamment moteur à combustion de véhicule automobile,
le réservoir comportant une installation de prélèvement de carburant à stockage cryogénique, composée au moins d'une conduite de prélèvement munie d'une vanne d'arrêt (1) actionnée par air comprimé,
la vanne d'arrêt (1) ayant un actionneur pneumatique (24) dont le cylindre recevant l'air comprimé, comporte plusieurs pistons (19, 19.1-19.6) reliés à une tige de piston (18), ces pistons étant sollicités simultanément par de l'air comprimé pour avoir la même course de coulissement de chaque piston (19, 19.1-19.6) et de la tige de piston (18), par l'addition des différences forces agissant sur les pistons (19, 19.1-19.6) donnant une force de coulissement appliquée à la tige de piston (18), et
un organe d'obturation de la vanne d'arrêt (1) est sollicité par un ressort de fermeture (17) pour être pressé contre la section d'ouverture d'un siège de soupape (2), tubulaire dans le prolongement du canal d'entrée (6) de carburant à stockage cryogénique pour maintenir une liaison étanche aux gaz et aux liquides vers le canal de sortie (7), entre l'organe d'obturation et le siège de soupape (2), tubulaire,
**caractérisée en ce que**
- l'organe d'obturation de la vanne d'arrêt (1) est une bille (3), et
- au moins un tube intérieur (13), entre la tige de piston (18) et la bille (3), transmet des efforts longitudinaux, ce tube étant muni sur sa face intérieure et sa face extérieure, d'un revêtement isolant thermique (15, 14).

2. Vanne d'arrêt (1) selon la revendication 1,
**caractérisée en ce que**
le ressort de fermeture (17) agit sur la tige de piston (18), et
le mouvement de coulissement de la tige de piston (18) est produit par l'application de l'air-comprimé sur les pistons (19, 19.1-19.6) dans la direction opposée à celle de la force de rappel exercée par le ressort de fermeture (17).

3. Vanne d'arrêt (1) selon la revendication 1 ou 2,
**caractérisée en ce que**
les pistons (19, 19.1-19.6) de l'actionneur pneumatique (24) sont alimentés en air comprimé par l'intermédiaire de la tige de piston (18).

4. Vanne d'arrêt (1) selon les revendications 1 à 3,
**caractérisée en ce qu'**
elle comporte un couvercle (23) faisant corps en une seule pièce avec le boîtier de soupape (12) et fermant le boîtier de soupape (12).

5. Vanne d'arrêt (1) selon la revendication 4,
**caractérisée en ce que**
l'air-comprimé traverse le couvercle (23) dans la tige de piston (18).

6. Vanne d'arrêt (1) selon les revendications 1 à 5,
**caractérisée en ce que**
le cylindre sollicité par l'air comprimé de l'actionneur pneumatique (24), dispose d'une autre installation d'isolation qui limite l'échange thermique avec le boîtier de soupape (12).

7. Vanne d'arrêt (1) selon la revendication 8,
**caractérisée en ce que**
l'autre installation d'isolation est un intervalle d'air entre le cylindre sollicité par l'air comprimé de l'actionneur pneumatique (24) et le boîtier de soupape (12).

8. Vanne d'arrêt (1) selon les revendications 1 à 7,
**caractérisée en ce que**
l'installation de prélèvement constitue également une installation de ventilation du carburant à stockage cryogénique.
